# EUROPÄISCHE PATENTSCHRIFT

(11) **EP 1 342 744 B1**
(45) Veröffentlichungstag und Bekanntmachung des Hinweises auf die Patenterteilung: **21.01.2004**
(21) Anmeldenummer: 03002093.7
(22) Anmeldetag: 30.01.2003
(51) Int. Cl.: C08J 5/04, C08J 5/10, B29B 11/16

(54) **Verfahren zur Kaltverpressung von Kompositmaterialien**
Process for cold pressing composite materials
Procédé pour matricer à froid des materiaux composites

(30) Priorität: 14.02.2002 DE 10206127
(43) Veröffentlichungstag der Anmeldung: 10.09.2003
(73) Patentinhaber: Wacker Polymer Systems GmbH & Co. KG, 84489 Burghausen (DE)
(72) Erfinder: Hashemzadeh, Abdulmajid, Dr., 84508 Burgkirchen (DE); Kohlhammer, Klaus, Dr., 84533 Marktl (DE); Lehmann, Thomas, Dr., 93161 Sinzing (DE); Weiler, Peter, Dr., 82538 Geretsried (DE)
(74) Vertreter: Schuderer, Michael, Dr.

(56) Entgegenhaltungen:
- EP-A- 0 283 195
- EP-A- 0 501 352
- WO-A-96/09927
- WO-A-98/50617
- US-A- 4 925 529
- US-A- 5 094 791
- PATENT ABSTRACTS OF JAPAN vol. 005, no. 168 (C-077), 27. Oktober 1981 (1981-10-27) & JP 56 098251 A (ASAHI CHEM IND CO LTD), 7. August 1981 (1981-08-07)
- PATENT ABSTRACTS OF JAPAN vol. 2000, no. 13, 5. Februar 2001 (2001-02-05) & JP 2000 290385 A (IDEMITSU PETROCHEM CO LTD), 17. Oktober 2000 (2000-10-17)

## Beschreibung

Die Erfindung betrifft ein Verfahren für die Kaltverpressung von partikulären Materialien, insbesondere Fasermaterialien, unter Verwendung von nichtvernetzbaren, thermoplastischen Polymeren, als Polymerpulver oder als wässrige Polymerdispersion, als Bindemittel.

Verbundwerkstoffe auf der Basis von Fasermaterialien werden in der Auto-, Flugzeug- und Bauindustrie verwendet. Die Platten müssen steif, schallabsorbierend sein und ein ausreichendes Wärmestandvermögen aufweisen. Es gibt unterschiedliche Herstellungsverfahren für solche Verbundwerkstoffe. Eine Anwendung für die Autoindustrie ist beispielsweise der Dachhimmel. Zur Herstellung von Dachhimmeln werden hier die gewünschten Eigenschaften durch die Kombination von Polyester-, Polyester-Bicomponentenfasern (Bicofasern) mit Glasfasermatten erreicht, wobei hier die Glasfasermatten zur Erhöhung der Steifigkeit und Thermostabilität verwendet werden. Die Bicofasern haben ein Kernmaterial mit hohem und eine Schale mit einem niedrigen Schmelzpunkt. Polyestervliese und Glasfasermatten werden bei dem Kaltpressverfahren bei einer Temperatur über dem Schmelzpunkt des Faserschalenmaterials aufgeheizt und anschließend bei niedriger Temperatur zu einem Formteil verpresst. Die Temperaturen der Aufheizphase liegen je nach Schmelztemperatur zwischen 160°C bis 240°C und die Presstemperatur liegt deutlich unter der Schmelztemperatur der Faserschale bei etwa 20°C bis 60°C. In der Presse verbinden sich die Fasern beim Abkühlen unter Druck. Diese Vorgehensweise wird als Kaltpressverfahren (Cold molding) bezeichnet.

Da die Verarbeitung von Glasfaser zu Hautreizungen führt und beim Recycling Probleme bereitet, sucht man neue Lösungen. Das US-Patent 6,214,456 beschreibt die Herstellung von Dachhimmel mit Bicofaser, wobei Polyurethanschaum anstatt Glasfaser zur Verstärkung eingesetzt wird. Nachteilig ist die unzureichende Schalladsorption der damit erhaltenen Verbundwerkstoffe. Im US-Patent 6,156,682 wird die Verstärkung des Verbundwerkstoffes ohne Glasfaser mittels Verwendung von thermisch vernetzbaren Polymeren (thermosetting) erreicht. Aus dem US-Patent 5,888,616 sind die Nachteile der Anwendung von wärmevernetzbaren Polymeren bekannt. Die damit gebundenen Werkstoffe können nicht mehr mittels Recycling wiederverwertet werden. Hier wird daher die Herstellung recycelbarer Werkstoffe mit Glasfaser, Polyester- und Polyester-Bicofaser beschrieben. Die Polyesterfaser haben dabei unterschiedliche Titer und Schmelzpunkte.

Es bestand daher die Aufgabe, Verbundwerkstoffe zur Verfügung zu stellen, welche auch ohne Glasfaseranteile über ein hohes Wärmestandvermögen verfügen und mittels Recycling wiederverwertbar sind.

Gegenstand der Erfindung ist ein Verfahren für die Kaltverpressung von partikulären Materialien, wobei das Bindemittel und das zu bindende Material zunächst auf eine Temperatur von 160°C bis 240°C vorerhitzt werden, und anschließend innerhalb eines Zeitraumes von 1 sec bis 20 sec bei einer Temperatur < 80°C und einem Pressdruck von 1 bis 120 bar zu einem Formkörper verpresst werden, dadurch gekennzeichnet,: dass als Bindemittel ein Polymerisat, als Polymerpulver oder als wässrige Polymerdispersion, eingesetzt wird, mit einer Glastemperatur Tg von > 80°C und einer komplexen Viskosität von < 15000 Pa.s bei 190°C, aus einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 11 C-Atomen, beispielsweise VeoVa9^{R} oder VeoVa10^{R} (Handelsnamen der Firma Shell). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Norbornylacrylat. Besonders bevorzugt sind Methylacrylat, Methylmethacrylat, n-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide wird üblicherweise Vinylchlorid eingesetzt.

In einer bevorzugten Ausführungsform enthält das Polymerisat noch 0.1 bis 50 Gew.-%, bezogen auf das Gesamtgewicht des Polymerisats, ein oder mehrere Comonomereinheiten aus der Gruppe umfassend carboxylfunktionelle und hydroxyfunktionelle Monomere.

Geeignete carboxylfunktionelle Comonomere sind ethylenisch ungesättigte Mono- und Dicarbonsäuren, vorzugsweise Acrylsäure, Methacrylsäure, Crotonsäure, Itaconsäure, Fumarsäure und Maleinsäure. Die Carboxylfunktion kann auch durch Copolymerisation von Maleinsäureanhydrid in das Copolymer eingeführt werden. Geeignete hydroxyfunktionelle Comonomere sind Hydroxyalkylacrylate und Hydroxyalkylmethacrylate mit C₁- bis C₈-Alkylrest, vorzugsweise Hydroxyethylacrylat und -methacrylat, Hydroxypropylacrylat und -methacrylat, Hydroxybutylacrylat und - methacrylat.

Besonders bevorzugt werden carboxylfunktionelle Comonomereinheiten, am meisten bevorzugt solche, welche sich von Acrylsäure, Methacrylsäure, Crotonsäure, Itaconsäure, Fumarsäure, Maleinsäure und Maleinsäureanhydrid ableiten. Der Anteil an funktionellen Einheiten beträgt besonders bevorzugt 0.1 bis 25 Gew.-%, am meisten bevorzugt 3 bis 20 Gew.-%, jeweils bezogen auf das Gesamtgewicht des Copolymers.

Bevorzugt sind die nachfolgend genannten Polymere, welche gegebenenfalls noch die eben genannten, funktionelle Gruppen enthaltenden Einheiten, in den eben beschriebenen Mengen aufweisen:
Vinylacetat-Polymerisate;
Vinylester-Ethylen-Copolymere, wie Vinylacetat-Ethylen-Copolymere;
Vinylester-Ethylen-Vinylchlorid-Copolymere, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure mit 5 bis 11 C-Atomen, insbesondere Versaticsäurevinylester (VeoVa9^{R}, VeoVa10^{R}), enthalten sind;
Vinylacetat-Copolymere mit einem oder mehreren copolymerisierbaren Vinylester wie Vinyllaurat, Vinylpivalat, Vinyl-2-ethylhexansäureester, Vinylester einer alpha-verzweigten Carbonsäure mit 5 bis 11 C-Atomen, insbesondere Versaticsäure-Vinylester (VeoVa9^{R}, VeoVa10^{R}), welche gegebenenfalls noch Ethylen enthalten;
Vinylester-Acrylsäureester-Copolymerisate insbesondere mit Vinylacetat, und Butylacrylat und/oder 2-Ethylhexylacrylat, welche gegebenenfalls noch Ethylen enthalten;
Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten.

Besonders bevorzugt sind dabei (Meth)acrylsäureester- und Styrol-Polymerisate:
Copolymerisate mit n-Butylacrylat und/oder 2-Ethylhexylacrylat;
Copolymerisate von Methylmethacrylat mit Butylacrylat und/oder 2-Ethylhexylacrylat, und/oder 1,3-Butadien;
Styrol-1,3-Butadien-Copolymere und Styrol-(Meth)Acrylsäureester-Copolymere wie Styrol-Butylacrylat, Styrol-Methylmethacrylat-Butylacrylat oder Styrol-2-Ethylhexylacrylat, wobei als Butylacrylat n-, iso- und t-Butylacrylat eingesetzt werden kann.

Am meisten bevorzugt werden carboxylfunktionelle Styrol-n-Butylacrylat-Copolymere, carboxylfunktionelle Methylmethacrylat-n-Butylacrylat-Copolymere, und carboxylfunktionelle Styrol-Methylmethacrylat-n-Butylacrylat-Copolymere, wobei die Carboxylgruppen über Acrylsäure- und/oder Methacrylsäureeinheiten eingebracht werden.

Die Monomerauswahl bzw. die Auswahl der Gewichtsanteile der Comonomere erfolgt dabei so, daß die Polymerisate eine Glasübergangstemperatur Tg von > 80°C aufweisen. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate kann mittels bekannter radikalisch initiierter Polymerisationsverfahren erfolgen, beispielsweise mittels Lösungspolymerisation oder wässriger Suspensionspolymerisation oder wässriger Emulsionspolymerisation. Bevorzugt ist die Emulsionspolymerisation. Zur Trocknung der Lösungen beziehungsweise Dispersionen können alle gängigen Trocknungsverfahren angewendet werden: Sprühtrocknung, Walzentrocknung, Gefriertrocknung, Bandtrocknung, Koagulation mit anschließender Wirbelschichttrocknung. Bevorzugt werden Sprühtrocknungs- und Walzentrocknungsverfahren angewendet. Bei der Trocknung können gegebenenfalls noch Additive wie Flammschutzmittel, Weichmacher, Füllstoffe, und Komplexbildner zugegeben werden.

Unter komplexer Viskosität versteht man Schwingungsviskosität (P. Carreau, Rheologie of Polymeric Systems 1997, Carl Hanser Verlag). Die komplexe Viskosität des Polymerisats kann in bekannter Weise über das Molekulargewicht und/oder die Menge an funktionellen Comonomereinheiten eingestellt werden. Bevorzugt wird eine komplexe Viskosität bei 190°C von < 8000 mPas.

Bei der Kaltverpressung wird das Polymerisat, als Polymerpulver oder als wässrige Polymerdispersion, vorzugsweise als Polymerpulver, zur Herstellung von Formkörpern aus partikulären Materialien wie Fasermaterialien oder partikulären Materialien aus mineralischen Materialien, Kunststoffen oder Naturstoffen wie Holzspänen, Korkpartikeln, Glaspartikeln, oder aus Kombinationen dieser Materialien eingesetzt. Die bevorzugte Anwendung ist die als Bindemittel für Fasermaterialien. Als Fasermaterial sind natürliche oder synthetische Rohstoffe geeignet. Beispiele hierfür sind Kunstfasern auf der Basis von faserbildenden Polymeren wie Viskosefaser, Polyesterfaser wie Polyesterhäckselfaser, Polyamidfaser, Polypropylenfaser, Polyethylenfaser, Polyethylenterephthalat-Faser (PET), Polyester-Bicomponentenfasern (Bicofasern) beispielsweise hochkristalline Polyesterbicomponentenfasern, oder Fasergemische aus diesen Fasern. Geeignet sind auch Mineralfasern, wie Glasfasern, Keramikfasern, Kohlefasern. Beispiele für natürliche Fasermaterialien sind Holz-, Cellulose-, Woll-, Baumwolle-, Jute-, Flachs-, Hanf-, Kokos-, Ramie- und Sisalfasern. Die Fasern können auch in Form von gewebten Textilien, von Garnen, oder in Form von Nonwovens wie Gelegen oder Gewirken eingesetzt werden. Diese Nonwovens können gegebenenfalls mechanisch vorverfestigt, beispielsweise genadelt, sein.

Bei dem Kaltpressverfahren wird das Polymerisat im allgemeinen in einer Menge von 5 bis 90 Gew.-%, vorzugsweise 20 bis 70 Gew.-%, bezogen auf das zu bindende Material, eingesetzt. Die Bindermenge richtet sich nach der gewünschten Steifigkeit des verpressten Formkörpers.

Bei der Herstellung der Formkörpern kann so vorgegangen werden, dass die Fasern mit dem Polymerpulver oder der wässrigen Polymerdispersion gemischt werden, die Faser/Polymerisat-Mischung nach den üblichen Verfahren der Nonwovenstechnologie, gegebenenfalls nach Kardieren der Faser/Polymerisat-Mischung und Nadeln ausgelegt wird, und bei den oben genannten Druck- und Temperaturbereichen vorerhitzt und kalt verpresst wird. Die Faserbindung kann auch mittels Einstreuen oder Einsprühen der Bindemittelzusammensetzung in ein Gewebe, Gelege oder in ein zuvor abgelegtes Faserbett erfolgen, gegebenenfalls nach Kardieren der Faser/Polymerisat-Mischung und Nadeln, und anschließend bei den oben genannten Druck- und Temperaturbereichen vorerhitzt und kalt verpresst werden.

Das Verfahren zur Kaltverpressung von partikulären Materialien wird vorzugsweise zur Herstellung von Formkörpern für den Automobil-Innenausbau eingesetzt, besonders bevorzugt zur Herstellung von Autodachhimmeln. Mittels der Verwendung von Bindemitteln auf Basis von nichtvernetzbaren thermoplastischen Polymerisaten konnten Autodachhimmel aus Polyesterfaser/PET ohne Verwendung von Glasfasern mit ausreichender Steifigkeit bzw. Wärmestandvermögen bei 85°C hergestellt werden. Aufgrund des thermoplastischen Charakters des Bindemittels sind die Formkörper, im Unterschied zu duroplastischen Bindemitteln, recycelfähig.

Die nachfolgenden Beispiele dienen der weiteren Erläuterung der Erfindung:

Es wurden folgende Bindepulver, welche jeweils 2 Gew.-% anorganisches Antiblockmittel enthielten, getestet:

### Vergleichspulver A:

Copolymer mit 85 Gew.-% Styrol, 5 Gew.-% Butylacrylat, 1 Gew.-% Acrylsäure und 9 Gew.-% Methacrylsäure, hergestellt mittels Emulsionspolymerisation ohne Regler (Dodecylmercaptan).

### Pulver B:

Copolymer mit 85 Gew.-% Styrol, 5 Gew.-% Butylacrylat, 1 Gew.-% Acrylsäure und 9 Gew.-% Methacrylsäure, hergestellt mittels Emulsionspolymerisation unter Regelung mit 0.25 Gew.-% Dodecylmercaptan, bezogen auf Monomer.

### Pulver C:

Copolymer mit 75 Gew.-% Styrol, 10 Gew.-% Methylmethacrylat, 5 Gew.-% Butylacrylat, 1 Gew.-% Acrylsäure und 9 Gew.-% Methacrylsäure hergestellt mittels Emulsionspolymerisation unter Regelung mit 0.4 Gew.-% Dodecylmercaptan, bezogen auf Monomer.

### Pulver D:

Copolymer mit 89 Gew.-% Styrol, 5 Gew.-% Butylacrylat, 1 Gew.-% Acrylsäure und 5 Gew.-% Methacrylsäure hergestellt mittels Emulsionspolymerisation unter Regelung mit 0.4 Gew.-% Dodecylmercaptan, bezogen auf Monomer.

### Vergleichspulver E:

Copolymer mit 74 Gew.-% Styrol, 20 Gew.-% Butylacrylat, 1 Gew.-% Acrylsäure und 5 Gew.-% Methacrylsäure hergestellt mittels Emulsionspolymerisation unter Regelung mit 0.4 Gew.-% Dodecylmercaptan, bezogen auf Monomer.

### Pulver F:

Vernetztes Copolymer mit 75 Gew.-% Styrol, 15 Gew.-% Butylacrylat, 10 Gew.-% Glycidylmethacrylat hergestellt mittels Emulsionspolymerisation unter Regelung mit 0.4 Gew.-% Dodecylmercaptan, bezogen auf Monomer.

### Vergleichspulver G: 90 Gew.-% Pulver E + 10 Gew.-% Pulver F

### Vergleichspulver H: 90 Gew.-% Pulver C + 10 Gew.-% Pulver F

### Herstellung der Faserformkörper zur Testung:

Zur Herstellung von Pressplatten wurden ein 1200 g/m² Polyestervlies mit einer Dicke von 38 mm verwendet. 60 Gew.-% Polymerpulver bezogen auf Vliesgewicht wurden mittels Aufstreuen und Rütteln in das Vlies eingearbeitet. Das Vlies wurde 2 min bei einer Temperatur von 240°C in einem Ofen aufgeheizt und anschließend bei 50°C und einem Druck von 120 bar auf 3 mm Dicke zusammengepresst.

### Testmethoden zur Prüfung:

### Komplexe Schmelzviskosität:

Die komplexe Schmelzvikosität der Bindepulver wurde durch mechanische Schwingungsmessungen mittels eines Rheometers Fa. Bohlin CVO 120 HR ermittelt. Die Messungen wurden mit einer Platte-Platte-Anordung (20 mm) mit einer Deformation von 0.05 durchgeführt. Die Meßfrequenz lag bei 1 Hz.

### Wärmestandvermögen:

Zur Prüfung hinsichtlich des Wärmestandvermögens wurden 240 mm x 20 mm lange Streifen aus den Prüfkörpern geschnitten. Diese Streifen wurden waägerecht auf einer planen Unterlage fixiert, so dass die Streifen mit einer Länge von 100 mm über den Rand der Unterlage überstanden. Den Teststreifen wurde ein 10g-Gewicht angehängt. Das Wärmestandvermögen wurde durch Messung der Durchbiegung nach einer Lagerung von 2 bzw. von 24 Stunden bei jeweils 85°C ermittelt.

### Ergebnisse:

In nachfolgender Tabelle sind die Ergebnisse zusammengefasst:
Die Ergebnisse zeigen, dass die Bindepulver (Pulver B, C und D) mit hoher Tg (über 80°C) und einer komplexen Viskosität < 15000 mPas sehr gutes Wärmestandvermögen besitzen.
Besonders gute Ergebnisse werden mit einer komplexen Viskosität < 8000 mPas erhalten (Pulver C,D).
Die Verwendung von Vernetzern bedingt eine deutliche Verschlechterung der Thermostabilität der Formkörper (Vergleichspulver G und H).
Mit zu niedriger Tg werden ebenfalls nur unbefriedigende Ergebnisse erhalten (Vergleichspulver E).

**Tabelle:**

| Pulver | Menge [Gew.%] | Tg [°C] | Komplexe Viskosität/190°C [Pa.s] | Wärmestand 85°C/2h [mm] | Wärmestand 85°C/24 h [mm] |
|---|---|---|---|---|---|
| - | - | - | - | 71 | 82 |
| A (V) | 60 | 105 | 15.100 | .62 | 70 |
| B | 60 | 105 | 8.600 | 43 | 48 |
| C | 60 | 110 | 4.600 | 15 | 26 |
| D | 60 | 95 | 2.500 | 16 | 25 |
| E (V) | 60 | 65 | 100 | 52 | 59 |
| G (V) | 60 | 65/60 | - | 45 | 50 |
| H (V) | 60 | 105/60 | - | 49 | 55 |
| V = Vergleichsbeispiel | | | | | |

## Patentansprüche

1. Verfahren für die Kaltverpressung von partikulären Materialien, wobei das Bindemittel und das zu bindende Material zunächst auf eine Temperatur von 160°C bis 240°C vorerhitzt werden, und anschließend innerhalb eines Zeitraumes von 1 sec bis 20 sec bei einer Temperatur < 80°C und einem Pressdruck von 1 bis 120 bar zu einem Formkörper verpresst werden, **dadurch gekennzeichnet, dass** als Bindemittel ein Polymerisat, als Polymerpulver oder als wässrige Polymerdispersion, eingesetzt wird, mit einer Glastemperatur Tg von > 80°C und einer komplexen Viskosität von < 15000 Pa.s bei 190°C, aus einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide.

2. Verfahren nach Anspruch 1, **dadurch gekennzeichnet, dass** als Bindemittel ein Polymerisat eingesetzt wird, aus der Gruppe umfassend Vinylacetat-Polymerisate, Vinylester-Ethylen-Copolymere, Vinylester-Ethylen-Vinylchlorid-Copolymere, Vinylacetat-Copolymere mit einem oder mehreren copolymerisierbaren Vinylester, Vinylester-Acrylsäureester-Copolymerisate, (Meth)acrylsäureester-Polymerisate, Styrol-Polymerisate, Styrol-1,3-Butadien-Copolymere, Styrol-(Meth)Acrylsäureester-Copolymere.

3. Verfahren nach Anspruch 1 oder 2, **dadurch gekennzeichnet, dass** das Polymerisat noch 0.1 bis 50 Gew.-%, bezogen auf das Gesamtgewicht des Polymerisats, ein oder mehrere Comonomereinheiten aus der Gruppe umfassend carboxylfunktionelle und hydroxyfunktionelle Monomere enthält.

4. Verfahren nach Anspruch 3, **dadurch gekennzeichnet, dass** das Polymerisat 0.1 bis 25 Gew.-% carboxylfunktionelle Comonomereinheiten enthält, welche sich von einem oder mehreren Monomeren aus der Gruppe Acrylsäure, Methacrylsäure, Crotonsäure, Itaconsäure, Fumarsäure, Maleinsäure und Maleinsäureanhydrid ableiten.

5. Verfahren nach Anspruch 1 bis 4, **dadurch gekennzeichnet, dass** als Bindemittel carboxylfunktionelle Styrol-n-Butylacrylat-Copolymere, carboxylfunktionelle Methylmethacrylat-n-Butylacrylat-Copolymere oder carboxylfunktionelle Styrol-Methylmethacrylat-n-Butylacrylat-Copolymere eingesetzt werden, wobei die Carboxylgruppen über Acrylsäure- und/oder Methacrylsäureeinheiten eingebracht werden.

6. Verfahren nach Anspruch 1 bis 5, **dadurch gekennzeichnet, dass** als partikuläre Materialien Fasermaterialien oder partikulären Materialien aus mineralischen Materialien, Kunststoffen oder Naturstoffen wie Holzspänen, Korkpartikeln, Glaspartikeln, oder aus Kombinationen dieser Materialien eingesetzt werden.

7. Verfahren nach Anspruch 6, **dadurch gekennzeichnet, dass** Fasermaterial aus natürlichen oder synthetischen Rohstoffen eingesetzt werden.

8. Verfahren nach Anspruch 7, **dadurch gekennzeichnet, dass** synthetische Fasermaterialien aus der Gruppe umfassend Viskosefaser, Polyesterfaser, Polyesterbicomponentenfaser, Polyamidfaser, Polypropylenfaser, Polyethylenfaser, Polyethylenterephthalat-Faser, oder Fasergemische aus diesen Fasern eingesetzt werden.

9. Verfahren nach Anspruch 1 bis 8 zur Herstellung von Formkörpern für den Automobil-Innenausbau.

10. Verfahren nach Anspruch 9 zur Herstellung von Autodachhimmeln.

## Claims

1. Process for the cold moulding of particulate materials, where the binder and the material to be bound are first preheated to a temperature of from 160 to 240°C, and then, within a period of from 1 to 20 sec, at a temperature < 80°C, and at a pressure of from 1 to 120 bar, are press-moulded to give a moulding, **characterized in that** the binder used comprises a polymer, in the form of polymer powder or in the form of aqueous polymer dispersion, its glass transition temperature Tg being > 80°C and its complex viscosity being < 15,000 Pa.s at 190°C, made from one or more comonomer units from the group consisting of vinyl esters of unbranched or branched alkylcarboxylic acids having from 1 to 18 carbon atoms, (meth)acrylic esters of branched or unbranched alcohols having from 1 to 15 carbon atoms, dienes, olefins, vinylaromatics, and vinyl halides.

2. Process according to Claim 1, **characterized in that** the polymer used as binder comprises a polymer from the group consisting of vinyl acetate polymers, vinyl ester-ethylene copolymers, vinyl ester-ethylene-vinyl chloride copolymers, vinyl acetate copolymers with one or more copolymerizable vinyl esters, vinyl ester-acrylic ester copolymers, (meth)acrylic ester polymers, styrene polymers, styrene-1,3-butadiene copolymers, styrene (meth)acrylic ester copolymers.

3. Process according to Claim 1 or 2, **characterized in that** the polymer also contains from 0.1 to 50% by weight, based on the total weight of the polymer, of one or more comonomer units from the group consisting of carboxy-functional and hydroxy-functional monomers.

4. Process according to Claim 3, **characterized in that** the polymer contains from 0.1 to 25% by weight of carboxy-functional comonomer units which derive from one or more monomers from the group consisting of acrylic acid, methacrylic acid, crotonic acid, itaconic acid, fumaric acid, maleic acid, and maleic anhydride.

5. Process according to any of Claims 1 to 4, **characterized in that**, as binder, use is made of carboxy-functional styrene-n-butyl acrylate copolymers, carboxy-functional methyl methacrylate-n-butyl acrylate copolymers, or carboxy-functional styrene-methyl methacrylate-n-butyl acrylate copolymers, the carboxy groups being introduced by way of acrylic acid units and/or methacrylic acid units.

6. Process according to any of Claims 1 to 5, **characterized in that** the particulate materials used comprise fibre materials or particulate materials made from mineral materials, from plastics, or from natural substances, such as wood chips, cork particles, glass particles, or from a combination of these materials.

7. Process according to Claim 6, **characterized in that** the fibre material used is composed of natural or synthetic raw materials.

8. Process according to Claim 7, **characterized in that** use is made of synthetic fibre materials from the group consisting of viscose fibre, polyester fibre, bicomponent polyester fibre, polyamide fibre, polypropylene fibre, polyethylene fibre, polyethylene terephthalate fibre, or of a fibre mixture made from these fibres.

9. Process according to any of Claims 1 to 8 for producing mouldings for interior automotive trim.

10. Process according to Claim 9 for producing automotive roofliners.

## Revendications

1. Procédé pour le matriçage à froid de matières particulaires, le liant et la matière à lier étant d'abord préchauffés à une température de 160°C à 240°C, et étant ensuite matricés en une pièce moulée sur une période de temps de 1 seconde à 20 secondes à une température < 80°C et une pression de 1 à 120 bars, **caractérisé en ce que** l'on utilise, en tant que liant, un polymère sous la forme d'une poudre de polymère ou sous la forme d'une dispersion aqueuse de polymère, présentant une température de transition vitreuse Tv > 80°C et une viscosité complexe < 15 000 Pa.s à 190°C, à base d'un ou de plusieurs motifs comonomères parmi le groupe constitué d'esters vinyliques d'acides alkylcarboxyliques non ramifiés ou ramifiés ayant de 1 à 18 atomes de carbone, d'esters acryliques, ou d'esters méthacryliques d'alcools ramifiés ou non ramifiés ayant de 1 à 15 atomes de carbone, de diènes, d'oléfines, de composés vinylaromatiques et d'halogénures de vinyle.

2. Procédé selon la revendication 1, **caractérisé en ce que** l'on utilise, en tant que liant, un polymère parmi le groupe constitué de polymères d'acétate de vinyle, de copolymères ester vinylique/éthylène, de copolymères ester vinylique/éthylène/chlorure de vinyle, de copolymères d'acétate de vinyle avec un ou plusieurs esters vinyliques copolymérisables, de copolymères ester vinylique/ester acrylique, de polymères d'ester (méth)acrylique, de polymères de styrène, de copolymères styrène/1,3-butadiène, de copolymères styrène/ester (méth)acrylique.

3. Procédé selon la revendication 1 ou 2, **caractérisé en ce que** le polymère renferme également de 0,1 à 50 % en poids, par rapport au poids total du polymère, d'un ou de plusieurs motifs comonomères parmi le groupe constitué de monomères à fonction carboxy et à fonction hydroxy.

4. Procédé selon la revendication 3, **caractérisé en ce que** le polymère renferme de 0,1 à 25 % en poids de motifs comonomères à fonction carboxy, qui sont dérivés d'un ou de plusieurs monomères parmi le groupe constitué de l'acide acrylique, de l'acide méthacrylique, de l'acide crotonique, de l'acide itaconique, de l'acide fumarique, de l'acide maléique et de l'anhydride maléique.

5. Procédé selon les revendications 1 à 4, **caractérisé en ce que** l'on utilise, en tant que liant, des copolymères styrène/acrylate de n-butyle à fonction carboxy, des copolymères méthacrylate de méthyle/acrylate de n-butyle à fonction carboxy ou des copolymères styrène/méthacrylate de méthyle/acrylate de n-butyle à fonction carboxy, les groupes carboxy étant introduits par l'intermédiaire de motifs acide acrylique et/ou acide méthacrylique.

6. Procédé selon les revendications 1 à 5, **caractérisé en ce que** l'on utilise, en tant que matières particulaires, des matières fibreuses ou des matières particulaires à base de matières minérales, de matières synthétiques ou de substances naturelles telles que des copeaux de bois, des particules de liège, des particules de verre, ou à base de combinaisons de ces matières.

7. Procédé selon la revendication 6, **caractérisé en ce que** l'on utilise une matière fibreuse à base de matières brutes naturelles ou synthétiques.

8. Procédé selon la revendication 7, **caractérisé en ce que** l'on utilise des matières fibreuses synthétiques parmi le groupe constitué de la fibre de viscose, de la fibre de polyester, de la fibre de polyester bi-composant, de la fibre de polyamide, de la fibre de polypropylène, de la fibre de polyéthylène, de la fibre de polyéthylène-téréphtalate, ou de mélanges fibreux à base de ces fibres.

9. Procédé selon les revendications 1 à 8 pour la production de pièces moulées pour l'aménagement intérieur d'automobiles.

10. Procédé selon la revendication 9 pour la production de garnitures de pavillons d'automobiles.
